# EUROPEAN PATENT APPLICATION

(11) **EP 2 785 130 A1**
(43) Date of publication of application: **01.10.2014**
(21) Application number: 12852169.7
(22) Date of filing: 05.11.2012
(51) Int. Cl.: H04W 72/12

(54) **D2D METHOD, D2D TERMINAL, AND BASE STATION**

(30) Priority: 24.11.2011 CN 201110378144
(71) Applicant: Huawei Technologies Co., Ltd., Shenzhen, Guangdong 518129 (CN)
(72) Inventor: GONG, Zhengwei, Shenzhen Guangdong 518129 (CN); SHANG, Zheng, Shenzhen Guangdong 518129 (CN)
(74) Representative: Isarpatent
(86) International application number: PCT/CN2012/084047
(87) International publication number: WO 2013/075581

(57) **Abstract**

The present invention provides a method for device-to-device communication, a terminal for device-to-device communication and a base station. The method for the device-to-device D2D communication includes: a terminal receives uplink scheduling signaling transmitted by a base station with in a n^{th} subframe, wherein the uplink scheduling signaling is used for scheduling D2D transmission within a (n+m)^{th} subframe, and n and m are positive integers; the terminal implements the D2D transmission with in the (n+m)^{th} subframe according to the uplink scheduling signaling. The D2D method, D2D terminal and the base station of the embodiments of the present invention may adopt different transmission modes of D2D control signaling under a condition that different frame structures are determined.

## Description

The application claims the priority of Chinese patent application No. 201110378144.7 filed with Chinese Patent Office on November 24, 2011, entitled "METHOD FOR DEVICE-TO-DEVICE COMMUNICATION, TERMINAL FOR DEVICE-TO-DEVICE COMMUNICATION AND BASE STATION", which is incorporated herein by reference in its entirety.

### TECHNICAL FIELD

The present invention relates to communication technology field, and more particular to a method for device-to-device communication, a terminal for device-to-device communication and a base station.

### BACKGROUND

The inevitable tendency of future wireless cellular communication network is high rate, high capacity and higher quality of service (QoS, Quality of Service), and how to effectively use a limited bandwidth resource to realize wireless broadband is particularly important. However, local services which rapidly develop in the current mobile Internet, such as video/music sharing, urgently need to be supported by introducing a new technology into existing cellular network. In order to improve use efficiency of air interface spectra, reduce heavy load of traditional cellular network and acquire higher system throughput, research on device-to-device communication (Device-to-Device communication, D2D) under the cellular network is increasingly valued. A D2D terminal may continuously keep communication performed through a base station and performs data communication with another terminal at the same time directly or under the control of a base station, so that occupation of an air interface resource is reduced, and system throughput rate is improved; and meanwhile, communication delay may be reduced, interference level is reduced, and terminal energy is saved.

At present, there are not so many research schemes for a D2D communication system standard. In view of great differences between requirements of the D2D communication for software and hardware and traditional terminal, and in view of multiple factors such as complexity of D2D communication terminal design, multiplexing and interference of cellular communication and the like, a D2D communication mode is a centralized control mode based on cellular communication, and D2D transmission is realized by using a uplink resource and a corresponding transmission mode. Apparently, the terminal for implementing the D2D communication needs to be added with an uplink receiving module.

### SUMMARY

Embodiments of the present invention provide a D2D method, a D2D terminal and a base station, which can combine characteristics of D2D communication and cellular communication and determine transmission modes of D2D control signaling for different frame structures.

In one aspect, a D2D method is provided, including: receiving uplink scheduling signaling transmitted by a base station within a n^{th} downlink subframe, wherein the uplink scheduling signaling is used for scheduling D2D transmission within a (n+m)^{th} uplink subframe, and n and m are positive integers; and implementing the D2D transmission within the (n+m)^{th} uplink subframe according to the uplink scheduling signaling.

In another aspect, a device-to-device D2D communication method is provided, including: receiving, by a base station, a D2D request message transmitted by a terminal; and transmitting, by the base station, uplink scheduling signaling to the terminal within a n^{th} subframe according to the request message, wherein the uplink scheduling signaling is used for scheduling the terminal to implement D2D uplink transmission within a (n+m)^{th} uplink subframe, and n and m are positive integers.

In a further aspect, a D2D terminal is provided, including: a first receiving unit, configured to receive uplink scheduling signaling transmitted by a base station within a n^{th} downlink subframe, wherein the uplink scheduling signaling is used for scheduling D2D transmission within a (n+m)^{th} uplink subframe, and n and m are positive integers; and a transmission unit, configured to implement the D2D transmission within the (n+m)^{th} uplink subframe according to the uplink scheduling signaling.

In a still further aspect, a base station is provided, including: a third receiving unit, configured to receive a D2D request message transmitted by a terminal; and a first transmitting unit, configured to transmit uplink scheduling signaling to the terminal within a n^{th} subframe according to the request message, wherein the uplink scheduling signaling is used for scheduling the terminal to implement D2D uplink transmission within a (n+m)^{th} uplink subframe, and n and m are positive integers.

The D2D method, the D2D terminal and the base station of the embodiments of the present invention may adopt different transmission modes of D2D control signaling under a condition that different frame structures are determined.

### BRIEF DESCRIPTION OF DRAWINGS

In order to illustrate the technical solution in the embodiments of the present invention more clearly, brief description will be made below to the drawings required in the embodiments of the present invention, and apparently, the drawings described below are some embodiments of the present invention only, and other drawings could be obtained based on these drawings by those ordinary skilled in this art without creative efforts.
Fig. 1 is a flowchart of a D2D method according to an embodiment of the present invention;
Fig. 2 is a flowchart of a D2D method according to another embodiment of the present invention;
Fig. 3 is a structure schematic diagram of a D2D terminal according to an embodiment of the present invention;
Fig. 4 is a local structure schematic diagram of a D2D terminal according to an embodiment of the present invention;
Fig. 5 is another local structure schematic diagram of a D2D terminal according to an embodiment of the present invention;
Fig. 6 is a structure schematic diagram of a D2D terminal according to another embodiment of the present invention;
Fig. 7 is a local structure schematic diagram of a D2D terminal according to another embodiment of the present invention;
Fig. 8 is a structure schematic diagram of a D2D terminal according to a further embodiment of the present invention;
Fig. 9 is a structure schematic diagram of a D2D terminal according to a still further embodiment of the present invention;
Fig. 10 is a structure schematic diagram of a base station according to an embodiment of the present invention;
Fig. 11 is a structure schematic diagram of a base station according to another embodiment of the present invention;
Fig. 12 is a structure schematic diagram of a base station according to a further embodiment of the present invention;
Fig. 13 is a structure schematic diagram of a base station according to a still further embodiment of the present invention.

### DESCRIPTION OF EMBODIMENTS

The technical solutions in the embodiments of the present invention are hereinafter described in detail and completely, with reference to accompanying drawings in the embodiments of the present invention. Apparently, the described embodiments are a part, but not all, of the embodiments of the present invention. All of the other embodiments that are obtained by those skilled in the art based on the embodiments in the invention without any inventive efforts fall into the scope protected by the present invention.

In existing LTE technology, uplink and downlink data transmission of a terminal is implemented on the basis of a determined frame structure and different received scheduling signaling, namely, transmission of a physical uplink sharing channel (PUSCH, Physical uplink sharing channel) within a (n+m)^{th} subframe (such as a (n+4)^{th} subframe) and a physical downlink sharing channel (PDSCH, Physical downlink sharing channel) within a n^{th} subframe is scheduled through uplink scheduling signaling (such as uplink grant (UL grant)) received within the n^{th} subframe and downlink scheduling signaling (such as downlink grant (DL grant)) received within the n^{th} subframe respectively. However, for D2D communication, as the D2D communication introduces the following characteristics, for example, a D2D terminal determines a transceiving state of each subframe or merely determines that the subframe is a D2D subframe, a scheduling mode of the D2D communication may need new design.

Suppose, for a first D2D terminal, a (n+m1)^{th} uplink subframe and a (n+m2)^{th} uplink subframe of the first D2D terminal are used for receiving and transmitting of D2D communication respectively; and correspondingly, for a second D2D terminal, the (n+m1)^{th} uplink subframe and the (n+m2)^{th} uplink subframe of the second D2D terminal are used for transmitting and receiving of D2D communication respectively. It should be understood that, n, m1 and m2 are all positive integers, and m1 is not equal to m2.

Moreover, due to the half-duplex characteristic of a D2D terminal, when the first D2D terminal needs to receive D2D transmission within the (n+m1)^{th} uplink subframe, as PUSCH transmission of cellular communication can not be implemented, a base station does not need to transmit uplink scheduling signaling of cellular communication to the first D2D terminal within the n^{th} subframe. In addition, when the second D2D terminal needs to transmit D2D transmission within the (n+m1)^{th} uplink subframe, because a current terminal does not support a condition that the D2D transmission is transmitted to different stations by using different processes respectively, as the PUSCH transmission of the cellular communication can not be implemented as well, the base station also does not need to transmit uplink scheduling signaling of cellular communication to the second D2D terminal within the n^{th} subframe.

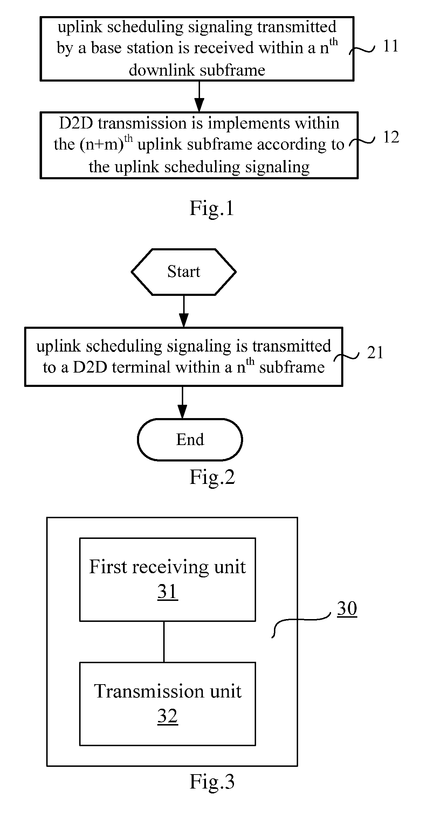

A device-to-device D2D communication method according to an embodiment of the present invention is described below with reference to Fig. 1.

As shown in Fig. 1, the D2D method includes:
11, uplink scheduling signaling transmitted by a base station is received within a n^{th} downlink subframe of a D2D terminal, wherein the uplink scheduling signaling is used for scheduling D2D transmission within a (n+m)^{th} uplink subframe, and n and m are positive integers.

Generally, before the D2D terminal receives the uplink scheduling signaling from the base station, the D2D terminal usually transmits a D2D request message to the base station.

At this moment, as the D2D terminal has determined that the (n+m)^{th} uplink subframe is a D2D subframe, that is to say, the terminal supports D2D transmission.

Suppose, configuration signaling transmitted by the base station may also be received within the n^{th} downlink subframe of the D2D terminal, and the configuration signaling is further used for indicating configuration of a D2D transceiving state within the (n+m)^{th} uplink subframe of the D2D terminal.

12, the D2D terminal implements the D2D transmission within the (n+m)^{th} uplink subframe according to the aforementioned uplink scheduling signaling.

Namely, the D2D terminal determines that a subframe structure is the D2D subframe and also determines a transceiving state of the D2D subframe; if the (n+m)^{th} uplink subframe of the D2D terminal is determined as a D2D receiving subframe according to the configuration signaling, the D2D terminal implements D2D receiving within the (n+m)^{th} uplink subframe; or if the (n+m)^{th} uplink subframe of the D2D terminal is determined as a D2D transmitting subframe according to the configuration signaling, the D2D terminal implements D2D transmitting within the (n+m)^{th} uplink subframe.

The aforementioned process may be summarized as follows: within the n^{th} subframe, the base station does not transmit uplink scheduling of cellular communication to the D2D terminal, but transmits the uplink scheduling signaling to the D2D terminal, which is used for scheduling the D2D transmission within the (n+m)^{th} subframe, namely, the D2D terminal within a transmitting subframe implements the D2D transmitting within the (n+m)^{th} subframe based on the uplink scheduling signaling within the n^{th} subframe, and the D2D terminal within a receiving subframe implements the D2D receiving within the (n+m)^{th} subframe based on the uplink scheduling signaling within the n^{th} subframe. As the D2D transmitting and the D2D receiving need to utilize an uplink frequency division duplexing (FDD, Frequency Division Duplexing) resource in existing cellular communication, the D2D transmitting and the D2D receiving may also be named as "D2D uplink transmitting" and "D2D uplink receiving" respectively.

It is thus clear that, according to the method of device-to-device D2D communication of the embodiment of the present invention, in combination with characteristics of D2D communication and cellular communication, under a condition that the subframe structure of the D2D terminal and the transceiving state are determined, a transmission mode of D2D control signaling may be determined.

However, if the D2D terminal may merely determine the subframe structure thereof is the D2D subframe and may not determine the transceiving state of the D2D subframe, in order to ensure normal D2D communication between D2D terminals, a certain method needs to be considered to configure the transceiving state of the D2D subframe. For example, the D2D terminal may implement the D2D transmission within the (n+m)^{th} uplink subframe according to difference in the number of uplink scheduling signaling received within the n^{th} uplink subframe; or the D2D terminal may also implement the D2D transmission within the (n+m)^{th} uplink subframe according to difference in information carried in the uplink scheduling signaling.

Specifically, the D2D terminal determines that the D2D transmitting is implemented within the (n+m)^{th} uplink subframe according to a first number of the uplink scheduling signaling received within the n^{th} uplink subframe, or the D2D terminal determines that the D2D receiving is implemented within the (n+m)^{th} uplink subframe according to a second number of the uplink scheduling signaling received within the n^{th} uplink subframe.

For example, an operation of the D2D receiving or the D2D transmitting performed by the D2D terminal may be distinguished through the uplink scheduling signaling of different numbers transmitted by the base station. Suppose, within the n^{th} subframe, the base station transmits one piece of uplink scheduling signaling to the D2D terminal, which is used for scheduling the D2D transmitting of the D2D terminal within the (n+m)^{th} uplink subframe, namely the D2D terminal acquires one piece of uplink scheduling signaling through blind analysis, and the D2D transmitting is implemented within the (n+m)^{th} uplink subframe. Suppose, within the n^{th} subframe, the base station transmits two pieces of uplink scheduling signaling to the D2D terminal, which is used for scheduling the D2D receiving of the D2D terminal within the (n+m)^{th} uplink subframe, namely the D2D terminal acquires two pieces of uplink scheduling signaling through blind analysis, and the D2D receiving is implemented within the (n+m)^{th} uplink subframe.

Moreover, the D2D terminal implements the D2D transmission within the (n+m)^{th} uplink subframe according to difference in information carried in the uplink scheduling signaling. If the information therein indicates receiving, the D2D terminal implements the D2D receiving within the (n+m)^{th} uplink subframe; and if the information therein indicates transmitting, the D2D terminal implements the D2D transmitting within the (n+m)^{th} uplink subframe. The information may be bit information for cell index field (CIF, Cell Index Field)or bit information for hopping flag (Hopping Flag).

For example, the base station transmits the uplink scheduling signaling including the CIF and uses the bit information for CIF therein to indicate the D2D receiving or the D2D transmitting. Suppose, within the n^{th} subframe, the D2D terminal acquires the uplink scheduling signaling through blind analysis, and then implements the D2D transmitting or the D2D receiving within the (n+m)^{th} uplink subframe according to indication contents of the bit information for CIF.

Or, some bit information of tradition uplink scheduling signaling is used as an indication, for example, one bit corresponding to a hopping flag is used to distinguish the D2D receiving and the D2D transmitting. For example, within the n^{th} subframe, the D2D terminal acquires the uplink scheduling signaling through blind analysis, and then implements the D2D transmitting or the D2D receiving within the (n+m)^{th} uplink subframe according to the bit information for hopping flag.

It is thus clear that, according to the method of device-to-device D2D communication of the embodiment of the present invention, in combination with the characteristics of the D2D communication and the cellular communication, under a condition that the subframe structure of the D2D terminal is merely determined and the transceiving state is not determined, a transmission mode of D2D control signaling may also be determined.

Correspondingly, as shown in Fig. 2, in order to implement transmission of the aforementioned D2D control signaling, a device-to-device D2D communication method implemented by a base station according to an embodiment of the present invention includes:
21, the base station transmits uplink scheduling signaling to a D2D terminal within a n^{th} subframe, wherein the uplink scheduling signaling is used for scheduling the D2D terminal to implement D2D uplink transmission within a (n+m)^{th} uplink subframe, and n and m are positive integers.

Generally, the base station transmits the uplink scheduling signaling to the D2D terminal after a D2D request message transmitted by the D2D terminal is received.

Under a condition that a subframe structure of the D2D terminal is merely determined and a transceiving state is not determined, the base station may transmit the uplink scheduling signaling of different numbers or the uplink scheduling signaling carrying different information to the terminal, so that the terminal implements D2D uplink receiving or uplink transmitting within the (n+m)^{th} uplink subframe according to the different numbers of the uplink scheduling signaling transmitted or different information carried in the uplink scheduling signaling.

It is thus clear that, according to the method of device-to-device D2D communication of the embodiment of the present invention, in combination with the characteristics of the D2D communication and the cellular communication, under a condition that the subframe structure of the D2D terminal is merely determined and the transceiving state is not determined, a transmission mode of D2D control signaling may also be determined.

Or, if the base station transmits configuration signaling to the terminal within the n^{th} subframe, wherein the configuration signaling further indicates configuration of a D2D transceiving state within the (n+m)^{th} uplink subframe of the terminal. For example, the configuration signaling further indicates that the (n+m)^{th} uplink subframe of the terminal is a D2D receiving subframe or a D2D transmitting subframe, so that the terminal implements the D2D uplink receiving or uplink transmitting within the (n+m)^{th} uplink subframe after the uplink scheduling signaling is received.

It is thus clear that, according to the method of device-to-device D2D communication of the embodiment of the present invention, in combination with characteristics of D2D communication and cellular communication, under a condition that the subframe structure of the D2D terminal and the transceiving state are determined, a transmission mode of D2D control signaling may be determined.

A D2D terminal according to an embodiment of the present invention is illustrated below in combination with Fig. 3.

In Fig. 3, a D2D terminal 30 includes a first receiving unit 31 and a transmission unit 32. The first receiving unit 31 is configured to receive uplink scheduling signaling transmitted by a base station within a n^{th} downlink subframe, wherein the uplink scheduling signaling is used for scheduling D2D transmission within a (n+m)^{th} uplink subframe, and n and m are positive integers. The transmission unit 32 is configured to implement the D2D transmission within the (n+m)^{th} uplink subframe according to the uplink scheduling signaling.

At this moment, the transmission unit 32 is further configured to implement the D2D transmission within the (n+m)^{th} uplink subframe according to the number of the uplink scheduling signaling received by the first receiving unit 31; or to implement the D2D transmission within the (n+m)^{th} uplink subframe according to information carried in the uplink scheduling signaling received by the first receiving unit 31.

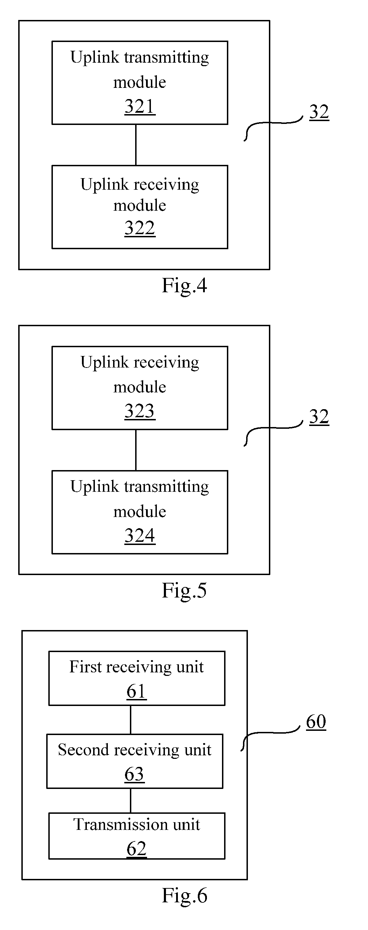

Therefore, the transmission unit 32 includes an uplink transmitting module 321, configured to implement D2D transmitting within the (n+m)^{th} uplink subframe according to a first number of the uplink scheduling signaling received by the first receiving unit 31; and an uplink receiving module 322, configured to implement D2D receiving within the (n+m)^{th} uplink subframe according to a second number of the uplink scheduling signaling received by the first receiving unit 31, as shown in Fig. 4.

Or, the transmission unit 32 includes an uplink receiving module 323. if the information carried in the uplink scheduling signaling received by the first receiving unit 31 indicates receiving, the uplink receiving module 321 implements the D2D receiving within the (n+m)^{th} uplink subframe; and an uplink transmitting module 324, if the information carried in the uplink scheduling signaling received by the first receiving unit 31 indicates transmitting, the uplink transmitting module 324 implements the D2D transmitting within the (n+m)^{th} uplink subframe, as shown in Fig. 5. The aforementioned information may be bit information for cell index field, or may be bit information for hopping flag.

Fig. 6 shows a structure schematic diagram of another D2D terminal according to an embodiment of the present invention. As shown in Fig. 6, besides a first receiving unit 61 and a transmission unit 62, a D2D terminal 60 also includes a second receiving unit 63, the second receiving unit 63 is configured to receive configuration signaling transmitted by a base station within a n^{th} downlink subframe, wherein the configuration signaling is used for indicating configuration of a D2D transceiving state within a (n+m)^{th} uplink subframe. The first receiving unit 61 and the transmission unit 62 have the same functions and structures as the first receiving unit 31 and the transmission unit 32 in Fig. 3.

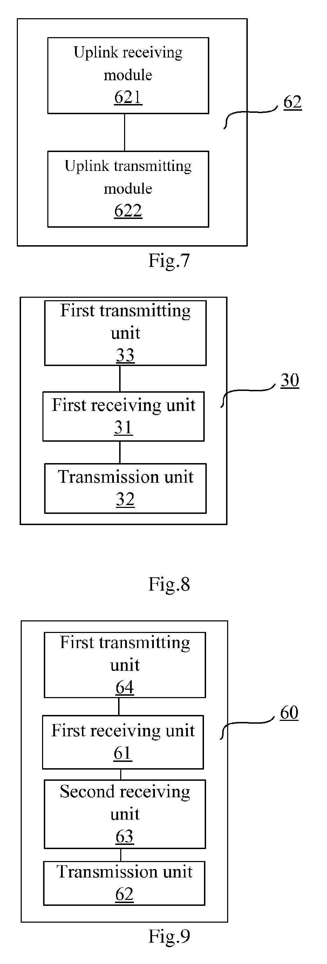

At this moment, as a subframe structure of the D2D terminal and the transceiving state are determined, the transmission unit 62 may also include an uplink receiving module 621, configured to implement D2D receiving within the (n+m)^{th} uplink subframe according to the uplink scheduling signaling under a condition that the (n+m)^{th} uplink subframe is determined as a D2D receiving subframe according to the configuration signaling; and an uplink transmitting module 622, configured to implement D2D transmitting within the (n+m)^{th} uplink subframe according to the uplink scheduling signaling under a condition that the (n+m)^{th} uplink subframe is determined as a D2D transmitting subframe according to the configuration signaling, as shown in Fig. 7.

Fig. 8 and Fig. 9 show structure schematic diagrams of D2D terminals according to other embodiments of the present invention. As shown in Fig. 8 and Fig. 9, the D2D terminals therein are added with first transmitting units for transmitting a D2D request message to a base station before uplink scheduling signaling transmitted by the base station is received within a n^{th} downlink subframe based on the D2D terminal 30 of Fig. 3 and the D2D terminal 60 of Fig. 6 respectively, namely a first transmitting unit 33 shown in Fig. 8 and a first transmitting unit 64 shown in Fig. 9.

It is thus clear that, according to the method of device-to-device D2D communication of the embodiment of the present invention, in combination with characteristics of D2D communication and cellular communication, under a condition that the subframe structure of the D2D terminal is merely determined or the subframe structure of the D2D terminal and the transceiving state are determined, a transmission mode of D2D control signaling may be determined.

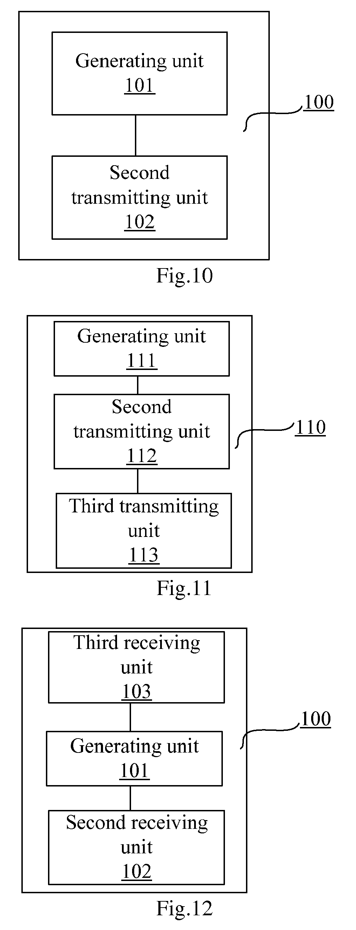

Correspondingly, Fig. 10 shows a base station supporting D2D according to an embodiment of the present invention. A base station 100 includes a generating unit 101 and a second transmitting unit 102, wherein the generating unit 101 is configured to generate a D2D request message, the second transmitting unit 102 is configured to transmit uplink scheduling signaling to a terminal within a n^{th} subframe, the uplink scheduling signaling is used for scheduling the terminal to implement D2D uplink transmission within a (n+m)^{th} uplink subframe, and n and m are positive integers.

The second transmitting unit 102 is further configured to transmit the uplink scheduling signaling of different numbers or the uplink scheduling signaling carrying different information to the terminal, so that the terminal implements D2D uplink receiving or uplink transmitting within the (n+m)^{th} uplink subframe according to the different numbers of the uplink scheduling signaling transmitted or different information carried in the uplink scheduling signaling.

Or, a base station supporting D2D according to the embodiment of the present invention may also have a structure shown in Fig. 11. As shown in Fig. 11, besides a generating unit 111 and a second transmitting unit 112, a base station 110 may also include a third transmitting unit 113, wherein the generating unit 111 and the second transmitting unit 112 have the same functions and structures as the generating unit 101 and the second transmitting unit 102 in Fig. 10. The third transmitting unit 113 is configured to transmit configuration signaling to a terminal within a n^{th} subframe, wherein the configuration signaling indicates configuration of a D2D transceiving state within a (n+m)^{th} uplink subframe of the terminal. The configuration signaling further indicates that the (n+m)^{th} uplink subframe of the terminal is a D2D receiving subframe or a D2D transmitting subframe, so that the terminal implements D2D uplink receiving or uplink transmitting within the (n+m)^{th} uplink subframe after the uplink scheduling signaling is received.

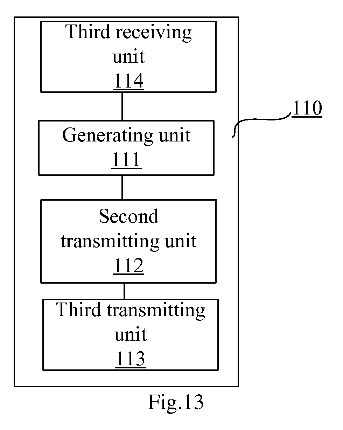

Fig. 12 and Fig. 13 show structure schematic diagrams of base stations according to other embodiments of the present invention. As shown in Fig. 12 and Fig. 13, the base stations therein are added with third receiving units for receiving a D2D request message transmitted by a terminal before uplink scheduling signaling is transmitted to the terminal within a n^{th} subframe based on the base station 100 of Fig. 10 and the base station 110 of Fig. 11 respectively, namely a third receiving unit 103 shown in Fig. 12 and a third receiving unit 114 shown in Fig. 13.

It is thus clear that, according to the method of device-to-device D2D communication of the embodiment of the present invention, in combination with characteristics of D2D communication and cellular communication, under a condition that the subframe structure of the D2D terminal is merely determined or the subframe structure of the D2D terminal and the transceiving state are determined, a transmission mode of D2D control signaling may be determined.

It should be appreciated for those of ordinary skill in the art that the units and algorithmic steps of all examples described in combination with the embodiments disclosed in the present invention may be implemented with electronic hardware or a combination of computer software and electronic hardware. Whether these functions are executed in a hardware or software mode depends on specific applications and design constraint conditions of the technical solutions. For each specific application, professionals may implement the described functions by different methods, but this realization should not be considered as being beyond the scope of the present invention.

Those skilled in the art to which the present invention pertains may clearly understand that, for the purpose of better convenience and briefness in description, for the specific working processes of the above-described systems, devices and units, reference may be made to the corresponding processes in the embodiments of the aforementioned methods, which will not be repeated redundantly herein.

In the several embodiments provided in the present application, it should be understood that, the disclosed systems, devices and methods may be realized in other modes. For example, the embodiments of the above-described devices are merely exemplary, for example, the division of the units is only a logic function division, other division modes may be adopted in practice, e.g., multiple units or components may be combined or integrated in another system, or some characteristics may be omitted or may not be executed. From another point of view, the displayed or discussed mutual coupling or direct coupling or communication connection may be indirect coupling or communication connection of devices or units through some interfaces, and may also be in electrical, mechanical or other forms.

The units illustrated as separate components may be or may not be physically separated, and the components displayed as units may be or may not be physical units, that is to say, the components may be positioned at one place or may also be distributed on multiple network units. The objectives of the solutions of the embodiments may be fulfilled by selecting part of or all of the units according to actual needs.

In addition, in various embodiments of the present invention, the functional units may be integrated in one processing unit, or the functional units may separately and physically exist, or two or more units may be integrated in one unit.

When the functions are realized in the form of software functional units and sold or used as independent products, the functions may be stored in a computer-readable storage medium. Based on such an understanding, the technical solution of the present invention substantially, or the part of the present invention making contribution to the prior art, or a part of the technical solution may be embodied in the form of a software product, and the computer software product is stored in a storage medium, which includes multiple instructions enabling computer equipment (which may be a personal computer, a server, a network equipment or the like) to execute all of or part of the steps in the methods of the embodiments of the present invention. The aforementioned storage medium includes: various media capable of storing program codes, such as U disk, mobile hard disk, read-only memory (ROM, Read-Only Memory), random access memory (RAM, Random Access Memory), magnetic disk, optical disk or the like.

The foregoing descriptions are merely specific embodiments of the present invention, rather than limiting the protection scope of the present invention. Any change or substitution that is readily conceived for any one skilled in the art within the technical scope disclosed by the invention shall fall into the protection scope of the invention. Therefore, the protection scope of the present invention shall be defined by the claims.

## Claims

1. A method for device-to-device D2D communication, comprising:
receiving uplink scheduling signaling transmitted by a base station within a n^{th} downlink subframe, wherein the uplink scheduling signaling is used for scheduling D2D transmission within a (n+m)^{th} uplink subframe, and n and m are positive integers; and
implementing the D2D transmission within the (n+m)^{th} uplink subframe according to the uplink scheduling signaling.

2. The method according to claim 1, further comprising:
receiving configuration signaling transmitted by the base station within the n^{th} downlink subframe, wherein the configuration signaling is used for indicating configuration of a D2D transceiving state within the (n+m)^{th} uplink subframe.

3. The method according to claim 2, wherein the implementing the D2D transmission within the (n+m)^{th} uplink subframe according to the uplink scheduling signaling comprises:
implementing D2D receiving within the (n+m)^{th} uplink subframe according to the uplink scheduling signaling, if the (n+m)^{th} uplink subframe is determined as a D2D receiving subframe according to the configuration signaling;
implementing D2D transmitting within the (n+m)^{th} uplink subframe according to the uplink scheduling signaling, if the (n+m)^{th} uplink subframe is determined as a D2D transmitting subframe according to the configuration signaling,.

4. The method according to claim 1, wherein the implementing the D2D transmission within the (n+m)^{th} uplink subframe according to the uplink scheduling signaling comprises:
implementing the D2D transmission within the (n+m)^{th} uplink subframe according to the number of the received uplink scheduling signaling; or
implementing the D2D transmission within the (n+m)^{th} uplink subframe according to information carried in the uplink scheduling signaling.

5. The method according to claim 4, wherein the implementing the D2D transmission within the (n+m)^{th} uplink subframe according to the number of the received uplink scheduling signaling comprises:
implementing D2D transmitting within the (n+m)^{th} uplink subframe according to a first number of the uplink scheduling signaling received;
implementing D2D receiving within the (n+m)^{th} uplink subframe according to a second number of the uplink scheduling signaling received.

6. The method according to claim 4, wherein the implementing the D2D transmission within the (n+m)^{th} uplink subframe according to information carried in the uplink scheduling signaling comprises:
implementing D2D receiving within the (n+m)^{th} uplink subframe, if the information indicates receiving;
implementing D2D transmitting within the (n+m)^{th} uplink subframe, if the information indicates transmitting.

7. The method according to any one of claims 4-6, wherein the information comprises bit information for cell index field or bit information for hopping flag.

8. The method according to any one of claims 1-7, wherein before receiving the uplink scheduling signaling transmitted by the base station within the n^{th} downlink subframe, the method further comprising:
transmitting a D2D request message to the base station.

9. A method for device-to-device D2D communication, comprising:
transmitting, by a base station, uplink scheduling signaling to a terminal within a n^{th} subframe, wherein the uplink scheduling signaling is used for scheduling the terminal to implement D2D uplink transmission within a (n+m)^{th} uplink subframe, and n and m are positive integers.

10. The method according to claim 9, further comprising:
transmitting, by the base station, configuration signaling to the terminal within the n^{th} subframe, wherein the configuration signaling indicates configuration of a D2D transceiving state within the (n+m)^{th} uplink subframe of the terminal.

11. The method according to claim 10, wherein the configuration signaling further indicates that the (n+m)^{th} uplink subframe of the terminal is a D2D receiving subframe or a D2D transmitting subframe, so that the terminal implements D2D uplink receiving or uplink transmitting within the (n+m)^{th} uplink subframe after the uplink scheduling signaling is received.

12. The method according to any one of claims 9-11, wherein the transmitting, by a base station, uplink scheduling signaling to a terminal within a n^{th} subframe comprises: transmitting, by the base station, the uplink scheduling of different numbers or the uplink scheduling signaling carrying different information to the terminal, so that the terminal implements D2D uplink receiving or uplink transmitting within the (n+m)^{th} uplink subframe according to the different numbers of the uplink scheduling signaling transmitted or the different information carried in the uplink scheduling signaling.

13. The method according to any one of claims 9-12, wherein before the uplink scheduling signaling is transmitted to the terminal within the n^{th} subframe, the method further comprising:
receiving, by the base station, a D2D request message transmitted by the terminal.

14. A terminal of device-to-device D2D communication, comprising:
a first receiving unit, configured to receive uplink scheduling signaling transmitted by a base station within a n^{th} downlink subframe, wherein the uplink scheduling signaling is used for scheduling D2D transmission within a (n+m)^{th} uplink subframe, and n and m are positive integers; and
a transmission unit, configured to implement the D2D transmission within the (n+m)^{th} uplink subframe according to the uplink scheduling signaling.

15. The D2D terminal according to claim 14, further comprising:
a second receiving unit, configured to receive configuration signaling transmitted by the base station within the n^{th} downlink subframe, wherein the configuration signaling is used for indicating configuration of a D2D transceiving state within the (n+m)^{th} uplink subframe.

16. The D2D terminal according to claim 15, wherein the transmission unit further comprises:
an uplink receiving module, configured to implement D2D receiving within the (n+m)^{th} uplink subframe according to the uplink scheduling signaling under a condition that the (n+m)^{th} uplink subframe is determined as a D2D receiving subframe according to the configuration signaling; and
an uplink transmitting module, configured to implement D2D transmitting within the (n+m)^{th} uplink subframe according to the uplink scheduling signaling under a condition that the (n+m)^{th} uplink subframe is determined as a D2D transmitting subframe according to the configuration signaling.

17. The D2D terminal according to claim 14, wherein the transmission unit is further configured to:
implement the D2D transmission within the (n+m)^{th} uplink subframe according to the number of the uplink scheduling signaling received by the first receiving unit; or
implement the D2D transmission within the (n+m)^{th} uplink subframe according to information carried in the uplink scheduling signaling received by the first receiving unit.

18. The D2D terminal according to claim 17, wherein the transmission unit comprises:
an uplink transmitting module, configured to implement D2D transmitting within the (n+m)^{th} uplink subframe according to a first number of the uplink scheduling signaling received by the first receiving unit; and
an uplink receiving module, configured to implement D2D receiving within the (n+m)^{th} uplink subframe according to a second number of the uplink scheduling signaling received by the first receiving unit.

19. The D2D terminal according to claim 17, wherein the transmission unit comprises:
an uplink receiving module, configured to implement D2D receiving within the (n+m)^{th} uplink subframe if the information carried in the uplink scheduling signaling received by the first receiving unit indicates receiving; and
an uplink transmitting module, configured to implement D2D transmitting within the (n+m)^{th} uplink subframe if the information carried in the uplink scheduling signaling received by the first receiving unit indicates transmitting.

20. The D2D terminal according to any one of claims 17-19, wherein the information carried in the uplink scheduling signaling received by the first receiving unit comprises bit information for cell index field or bit information for hopping flag.

21. The D2D terminal according to any one of claims 14-20, further comprising:
a first transmitting unit, configured to transmit a D2D request message to the base station before the first receiving unit receives the uplink scheduling signaling transmitted by the base station within the n^{th} downlink subframe.

22. A base station, comprising:
a generating unit, configured to generate a request message for device-to-device D2D communication; and
a second transmitting unit, configured to transmit uplink scheduling signaling to the terminal within a n^{th} subframe according to the request message, wherein the uplink scheduling signaling is used for scheduling the terminal to implement D2D uplink transmission within a (n+m)^{th} uplink subframe, and n and m are positive integers.

23. The base station according to claim 22, further comprising:
a third transmitting unit, configured to transmit configuration signaling to the terminal within the n^{th} subframe, wherein the configuration signaling indicates configuration of a D2D transceiving state within the (n+m)^{th} uplink subframe of the terminal.

24. The base station according to claim 23, wherein the configuration signaling further indicates that the (n+m)^{th} uplink subframe of the terminal is a D2D receiving subframe or a D2D transmitting subframe, so that the terminal implements D2D uplink receiving or uplink transmitting within the (n+m)^{th} uplink subframe after the uplink scheduling signaling is received.

25. The base station according to claim 22, wherein the second transmitting unit is further configured to transmit the uplink scheduling of different numbers or the uplink scheduling signaling carrying different information to the terminal, so that the terminal implements D2D uplink receiving or uplink transmitting within the (n+m)^{th} uplink subframe according to the different numbers of the uplink scheduling signaling transmitted or the different information carried in the uplink scheduling signaling.

26. The base station according to any one of claims 22-25, further comprising:
a third receiving unit, configured to receive a D2D request message transmitted by the terminal before the uplink scheduling signaling is transmitted to the terminal within the n^{th} subframe.
